# EUROPEAN PATENT APPLICATION

(11) **EP 2 555 531 A2**
(43) Date of publication of application: **06.02.2013**
(21) Application number: 12162675.8
(22) Date of filing: 30.03.2012
(51) Int. Cl.: H04N 13/04

(54) **Display apparatus displaying broadcasting information of three-dimensional image and control method thereof**

(30) Priority: 04.08.2011 KR 20110077777
(71) Applicant: Samsung Electronics Co., Ltd., Suwon-si, Gyeonggi-do, 443-742 (KR)
(72) Inventor: Kim, Ha-hyoung, Gyeonggi-do (KR)
(74) Representative: Bruce, Alexander Richard Henry

(57) **Abstract**

Disclosed are a display apparatus displaying broadcasting information of a three-dimensional (₃D) image and a control method thereof, the display apparatus including: a signal receiver which receives broadcasting information of each channel comprised in a broadcasting signal; an image processor which processes the broadcasting signal to display an image; a display unit which displays thereon an image and broadcasting information based on the broadcasting signal; and a controller which searches the received broadcasting information of each channel, identifies a ₃D image among the broadcasting information, displays the broadcasting information of the ₃D image by channel on the display unit and changes into a channel selected by a user, upon receiving a user request for displaying a ₃D broadcasting list. Accordingly, users are capable of changing into a desired broadcasting channel for viewing by extracting broadcasting information of a ₃D image only and displaying broadcasting information of each channel.

## Description

The present invention relates to a display apparatus displaying broadcasting information of a three-dimensional (3D) image and a control method thereof, and more particularly, to a display apparatus and a control method thereof which extracts and displays broadcasting information of a 3D image and enables a user to efficiently select a 3D broadcasting channel if a 3D broadcasting channel or a normal broadcasting channel transmits 3D broadcasting.

In the current broadcasting environment, channels are being converted into a digital format and a 3D broadcasting signal is currently under testing. In the future, each broadcasting station might provide at least one channel having a 3D broadcasting signal. There are thousands of channels for satellite TVs in Europe, in which case the number of 3D channels could be more than double digits.

Currently, if a user changes a channel, he/she must put on or take off glasses whenever changing into a two-dimensional (2D) or a 3D channel until finding a desired 3D broadcasting channel. As TVs do not only provide 3D broadcasting channels, but also provide 2D broadcasting channels, it takes a lot of time to change channels. Thus the inconvenience to a user is increased.

One or more exemplary embodiments may overcome the above disadvantages and other disadvantages not described above. However, it is understood that one or more exemplary embodiment are not required to overcome the disadvantages described above, and may not overcome any of the problems described above.

An aspect of an exemplary embodiment provides a display apparatus which displays broadcast information of a three-dimensional (3D) image, the display apparatus including: a signal receiver which receives the broadcasting signal comprising broadcasting information of each channel included in the broadcasting signal, wherein the received broadcasting information comprises the broadcast information of the 3D image; an image processor which processes the received broadcasting signal to display an image; a display unit which displays the image and the broadcasting information based on the received broadcasting signal; and a controller which, upon receiving a user request for displaying a 3D broadcasting list, searches the received broadcasting information of each channel, identifies the 3D image among the broadcasting information and displays the broadcasting information of the 3D image by channel on the display unit, and upon receiving a selection of a desired channel by a user, the controller changes to the desired channel selected by a user.

Each channel may display broadcasting information of the 3D image comprising an exclusive 3D broadcasting channel and a two-dimensional (2D) broadcasting channel.

The searching of the received broadcasting information by the controller may include searching the received broadcasting information by channel for broadcasting programs which are currently being broadcast.

If the user inputs time information or if a predetermined time is set automatically via the received broadcasting information, the searching of the received broadcasting information by the controller may include searching the received broadcasting information by channel for at least one broadcast corresponding to one of the predetermined time and the time information input by the user.

The broadcasting information of the 3D image may include a channel name, a broadcasting time and summary information of broadcasting programs.

The broadcasting information of the 3D image may further include rating information of the broadcasting programs.

The broadcasting information of the 3D image may include 3D information of the image.

The 3D information of the image may include 3D mode information, which comprises a side-by-side mode, a top-bottom mode, a checkerboard mode, a frame sequence mode and a frame package mode.

The display apparatus may further include a storage unit which stores broadcasting information of the searched for 3D image by channel.

An aspect of an exemplary embodiment provides a control method of a display apparatus displaying broadcasting information of a three-dimensional (3D) image, the control method including: receiving broadcasting information of each channel included in the broadcasting signal, wherein the broadcasting information comprises the broadcasting information of the 3D image; receiving a user request for displaying a 3D broadcasting list; searching the received broadcasting information of each channel for the 3D image; displaying the broadcasting information of the searched for 3D image by channel; and changing to a channel selected by the user.

Each channel may include an exclusive 3D broadcasting channel and a two-dimensional (2D) broadcasting channel.

The searching of the broadcasting information may include searching the broadcasting information by each channel for broadcasting programs which are currently being broadcast.

If the user inputs time information or a predetermined time is set automatically via the broadcasting information, the searching may include searching the broadcasting information by each channel for broadcasting programs broadcast at a time corresponding to one of the predetermined time and the time information input by the user.

The broadcasting information of the 3D image may include a channel name, a broadcasting time and summary information of broadcasting programs.

The broadcasting information of the 3D image may further include rating information of the broadcasting programs.

The broadcasting information of the 3D image may include 3D information of the image.

The 3D information of the image may include 3D mode information, which comprises a side side-by-side mode, a top-bottom mode, a checkerboard mode, a frame sequence mode and a frame package mode.

The method may further include storing the broadcasting information of the searched for 3D image by channel.

The 3D broadcasting list may be displayed in an OSD format.

The control method may further include displaying a 2D broadcasting list in the OSD format.

An aspect of an exemplary embodiment provides a display apparatus which communicates with a remote controller and displays broadcasting information of a three-dimensional (3D) image, the display apparatus including: a signal receiver which receives broadcasting information of each channel in a broadcasting signal, wherein the received broadcasting information comprises the broadcasting information of the 3D image; an image processor which processes the received broadcasting signal to display an image; a display unit which displays the image and the received broadcasting information; and a controller which searches the received broadcasting information of each channel, identifies a 3D image among the received broadcasting information, stores the broadcasting information of the 3D image by channel, receives a selection by a user through the remote controller for a desired 3D broadcasting channel and changes to the desired 3D broadcasting channel based on the received selection by the user through the remote controller.

An aspect of an exemplary embodiment provides a control method of a display apparatus which communicates with a remote controller and displays broadcasting information of a three-dimensional (3D) image, the control method including: receiving broadcasting information of each channel, wherein the broadcasting information comprises the 3D broadcasting information; searching the received broadcasting information of each channel for the 3D image; storing the broadcasting information of the 3D image by channel; receiving a selection by a user through the remote controller for a desired 3D broadcasting channel; and changing to the desired 3D broadcasting channel based on the received selection by the user through the remote controller.

The above and/or other aspects will become apparent and more readily appreciated from the following description of the exemplary embodiments, taken in conjunction with the accompanying drawings, in which:
FIG. 1 is a block diagram of a display apparatus which displays broadcasting information of a 3D image according to an exemplary embodiment;
FIG. 2 illustrates an example of broadcasting information of a 3D image displayed in the display apparatus according to the exemplary embodiment;
FIG. 3 illustrates an example of broadcasting information of a 3D image displayed in the display apparatus according to another exemplary embodiment;
FIG. 4 illustrates an example of broadcasting information of a 3D image displayed in the display apparatus according to another exemplary embodiment;
FIG. 5 is a flowchart of a control method of the display apparatus displaying broadcasting information of a 3D image according to an exemplary embodiment; and
FIG. 6 is a flowchart of a control method of the display apparatus displaying broadcasting information of a 3D image according to another exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

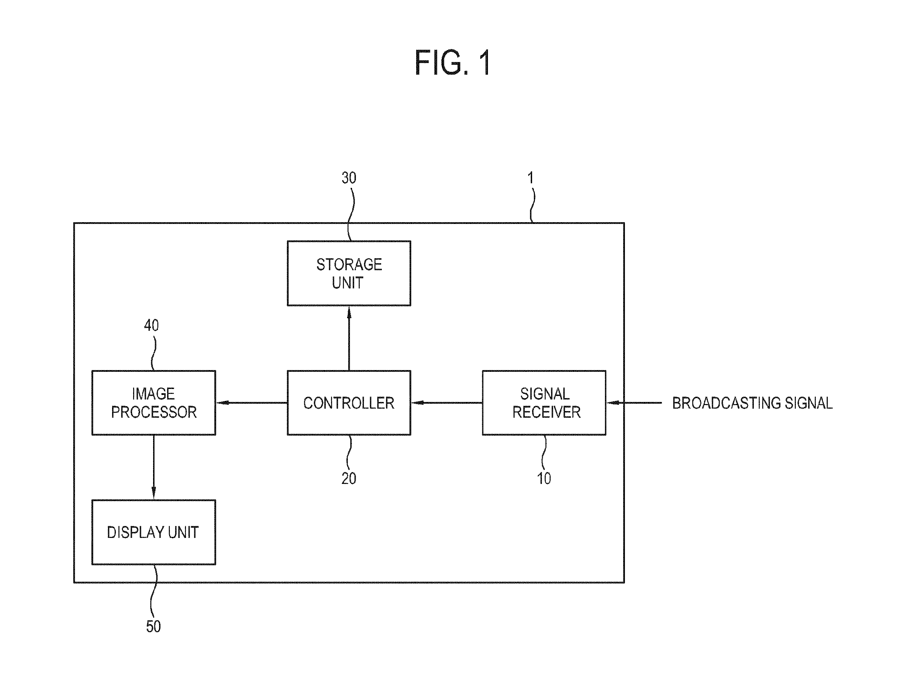

FIG. 1 is a block diagram of a display apparatus which displays broadcasting information of a 3D (stereoscopic) image according to an exemplary embodiment.

Referring to FIG. 1, a display apparatus 1 includes a signal receiver 10, a controller 20, a storage unit 30, an image processor 40 and a display unit 50. The display apparatus 1 may include a digital TV such as a liquid crystal display (LCD) television (TV), a light-emitting diode (LED) TV or plasma display panel (PDP) TV. The signal receiver 10 receives a broadcasting signal by channel in the form of wireless or wired signal. The broadcasting signal includes image information and broadcasting information. The image processor 40 processes a broadcasting signal input by the signal receiver 10 to display an image. The display unit 50 displays thereon image information and broadcasting information based on a broadcasting signal input by the image processor 40. The controller 20 controls the storage unit 30 and the image processor 40 according to a broadcasting signal input by the signal receiver 10. The controller 20 searches a field displaying a 3D image from the broadcasting information by channel and displays on the display unit 50 the broadcasting information by channel corresponding to a 3D image upon receiving an external input to display a 3D broadcasting list in an on-screen display (OSD) format on the display unit 50. A user may select one of channel information displayed by channel on the display unit 50 and view the corresponding 3D image. A user may select one of channel information displayed by channel on the display unit 50 and view image information and broadcasting info. The 3D image may also be referred to as a 3D broadcast, 3D image broadcast or a 3D channel, or a broadcast or channel providing 3D or stereoscopic images or video.

For example, if a user executes a "3D broadcasting list" by using a menu of the display apparatus 1 or a menu of a remote controller, 3D information is extracted from received broadcasting information of all channels. In the case of a broadcast under the Advanced Television Systems Committee (ATSC) standard, the 3D information is extracted by using program and system information protocol (PSIP) to be displayed in the OSD format on the display unit 50. In the case of Digital Video Broadcasting (DVB), the 3D information is extracted by using a system information (SI) table to be displayed in the OSD format on the display unit 50. A user may select one of the 3D information from the OSD menu by using a mouse or a channel moving key to view the 3D image of the channel.

The storage unit 30 stores therein the broadcasting information of the 3D image searched by the controller 20 by channel. The broadcasting information of the 3D image is displayed on the display unit 50 by channel after being stored in the storage unit 30. Each channel includes an exclusive 3D broadcasting channel (i.e., a channel which is exclusively a 3D broadcasting channel) and a 2D broadcasting channel. Each broadcasting station may provide an exclusive 3D broadcasting channel as well as a 2D broadcasting channel as a normal broadcasting channel, and may transmit a 3D image by using a 2D broadcasting channel. In some aspects, the controller 20 may generate a list which comprises only 3D (stereoscopic) channels. In some aspects, the controller may determine whether a channel which broadcasts both 3D images and 2D images is broadcasting 3D or 2D images, and determine the list for the channel at the appropriate time accordingly. An identified 3D image broadcast channel may include both a channel broadcasting exclusively in 3D, and a channel transmitting 3D images using a 2D broadcast channel.

Upon receiving a request for displaying a 3D broadcasting list, the controller 20 searches broadcasting information by channel which is currently being broadcast. For example, based on the time at which the request for 3D broadcasting list is received, the controller 20 identifies whether the broadcasting program(s) provided at the current time by the exclusive 3D broadcasting channel and the 2D broadcasting channel is 3D, and displays broadcasting information corresponding to a 3D image (3D channel) by channel on the display unit 50. According to another exemplary embodiment, a user may wish to view broadcasting information of a 3D image by channel at particular time instead of at the current time. If a user sets a desired time for the search by using a menu of the display apparatus 1 or a menu of a remote controller and executes the "3D broadcasting list", the controller 20 searches broadcasting information of the time set for the exclusive 3D broadcasting channel and 2D broadcasting channel and displays broadcasting information of the 3D image by channel on the display unit 50. According to another exemplary embodiment, if a user does not set the time and only executes the "3D broadcasting list", not only broadcasting information of the 3D image by channel at the current time but also broadcasting information of all 3D images after the current time may be displayed on the display unit 50.

In the foregoing exemplary embodiments, displaying broadcasting information upon a user's request has been described. However, broadcasting information may be displayed even without a user's request. For example, if the display apparatus 1 is turned on, the controller 20 may search broadcasting information of each channel and display broadcasting information of a 3D image by channel on the display unit 50. Upon receiving a request for displaying a broadcasting list, but not the 3D broadcasting list, the controller 20 may search broadcasting information of each channel and separately display broadcasting information of a 2D image and of a 3D image. Then, a user may move channels in the 2D broadcasting list only or move channels in the 3D broadcasting list only to thereby conveniently select 2D or 3D broadcasting.

The broadcasting information of a 3D image may include one or more ofa channel name transmitting a corresponding image, broadcasting time for the concerned image and a title of the corresponding image. The broadcasting information of the 3D image may further include summary information of the image other than the title of the image.

The broadcasting information of the 3D image may further include rating information of a corresponding image. If the rating information is displayed, the corresponding image may not be exposed to children and teenagers.

The broadcasting information of the 3D image (channel) may include 3D information of a corresponding image. For example, the broadcasting information of the 3D image may include 3D mode information (e.g., side by side, top-bottom, checkerboard, frame sequence and frame package) so that a user may set the 3D mode of the display apparatus 1 according to the 3D mode information of the corresponding image. For example, if the display apparatus 1 is set in top-bottom mode and the corresponding image is transmitted in side-by-side mode, a user may change the 3D mode of the display apparatus 1 to side by side based on the 3D mode information displayed on the display unit 50.

In the foregoing exemplary embodiments, the broadcasting information of the 3D image is displayed on the display unit 50 and the channel is changed to a channel selected by a user. However, a user may select a 3D broadcasting channel while the broadcasting information of the 3D image is not displayed on the display unit 50.

More specifically, upon receiving broadcasting information of each channel included in a broadcasting signal, the controller 20 searches broadcasting information of each channel, identifies a 3D image, automatically stores broadcasting information of the 3D image by channel and changes to a 3D broadcasting channel selected by a user through a remote controller.

For example, if the display apparatus 1 receives broadcasting information of each channel, the controller 20 searches which channel's image is 3D among broadcasting information of all channels being received, and automatically stores in the storage unit 20 the broadcasting information of the searched 3D image by channel. The broadcasting information of the 3D image automatically stored by channel may include not only broadcasting information of the 3D image by channel at the current time but also broadcasting information of all 3D images after the current time. If a user subsequently changes a plurality of channels which currently broadcast a 3D image by using an exclusive key for selecting a 3D broadcasting channel of a remote controller while viewing a 2D or a 3D broadcast, the controller 20 subsequently selects and changes to a channel which currently broadcasts a 3D image among channels broadcasting 3D images stored in the storage unit 30.

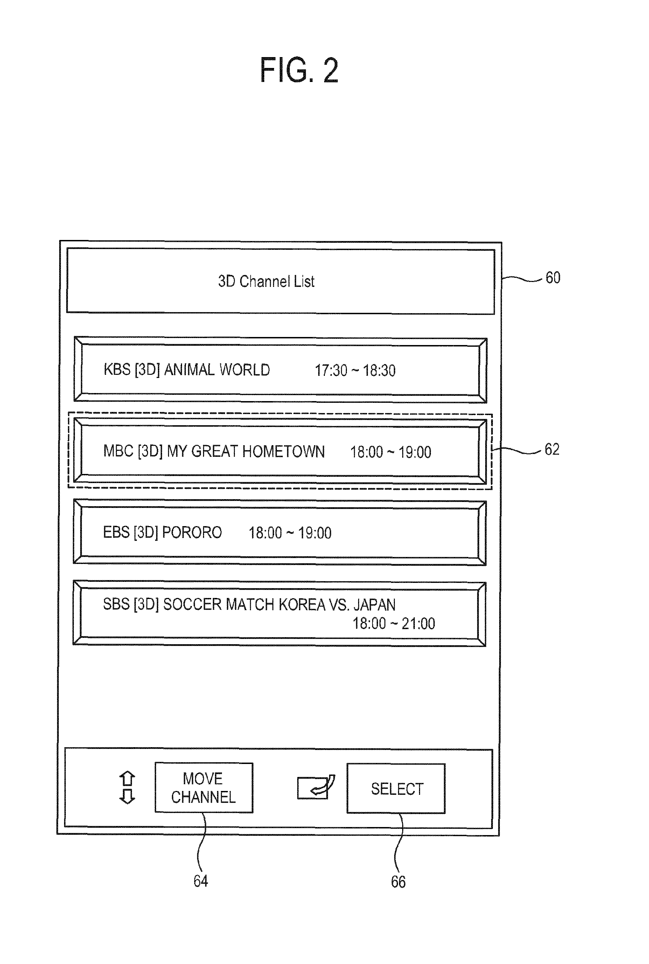

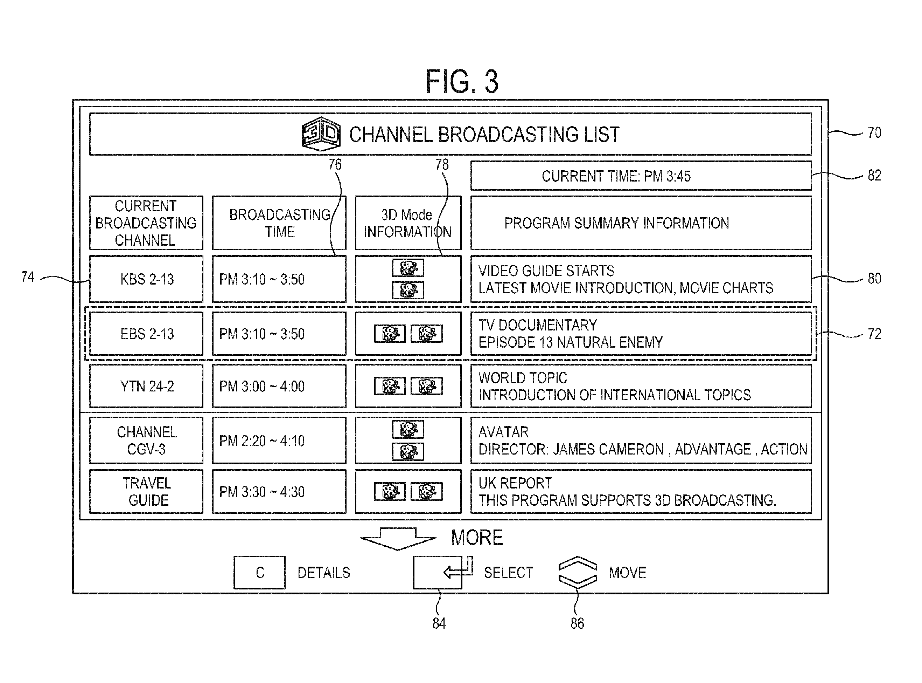

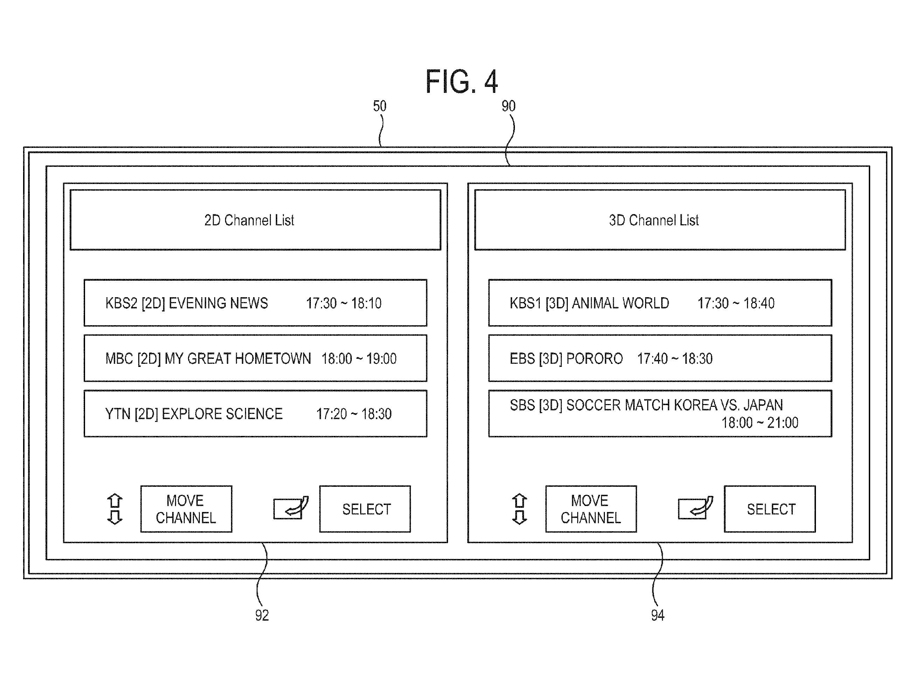

FIG. 2 illustrates an example of broadcasting information of a 3D image displayed in the display apparatus according to an exemplary embodiment. FIG. 3 illustrates an example of broadcasting information of a 3D image displayed in the display apparatus according to another exemplary embodiment. FIG. 4 illustrates an example of broadcasting information of a 3D image displayed in the display apparatus according to another exemplary embodiment.

Referring to FIG. 2, a 3D broadcasting list is displayed in an OSD format 60 on the display unit 50. Upon receiving a user's request for displaying a 3D broadcasting list, the controller 20 searches broadcasting information of each channel at the current time (in this example, the current time is 18:20) and searches which channel provides a 3D image at 18:20. If the 3D image is searched, the controller 20 displays channel names (e.g., KBS, MBC, EBS and SBS) and displays 3D display, broadcasting title, and broadcasting schedule information 62. A user may select a desired broadcasting program by using a mouse or a movement key 64. In the foregoing exemplary embodiment, the display apparatus 1 displays the foregoing upon receiving a request for displaying the 3D broadcasting list. However, the foregoing may be displayed even without a user's request as described in FIG. 1. The controller may generate a separate list containing only the detected channels showing 3D (stereoscopic images).

Referring to FIG. 3, a 3D broadcasting list is displayed in an OSD format 70 on the display unit 50. Upon receiving a user's request for displaying the 3D broadcasting list, the controller 20 searches broadcasting information of each channel at the current time (in this example, the current time is 3:45) and searches which channel provides a 3D image at 3:45. If the 3D image is searched, the controller 20 displays channel names (e.g., KBS 2-13, EBS 2-13, YTN 24-2, Channel CGV-3 and travel guide) 74, and displays broadcasting time 76, 3D mode information 74 and program summary information 80 of the corresponding broadcast. A user may select a desired broadcasting program by using a mouse or a movement key 86. A user sets the 3D mode of the display apparatus 1 according to the 3D mode information 78 of the corresponding image. The 3D mode information 78 may include side side-by-side, top-bottom, checkerboard, frame sequence and frame package. A user may use the 3D mode information 78 to identify whether the corresponding image is a side side-by-side mode, a top-bottom mode, a checkerboard mode, a frame sequence mode or a frame package mode. If the display apparatus 1 is set in top-bottom mode, and a corresponding image is in a side-by-side mode, a user may set the display apparatus 1 in side by side according to the corresponding image. In the foregoing exemplary embodiment, the broadcasting information is displayed only upon request from a user. However, the broadcasting information may be displayed even without a user's request as described in FIG. 1.

Referring to FIG. 4, 2D and 3D broadcasting lists are displayed in an OSD format 90 on the display unit 50. The broadcasting list may be displayed not only when the controller 20 receives a user's request but also when the display apparatus 1 is turned on and upon receiving a request for displaying the broadcasting list. A user may search and select a desired broadcasting list out of a 2D broadcasting list 92 and a 3D broadcasting list 94. The controller may generate separate lists for 2D channels and 3D channels. The separate lists may be presented on the same display screen, and the user may select from either list..

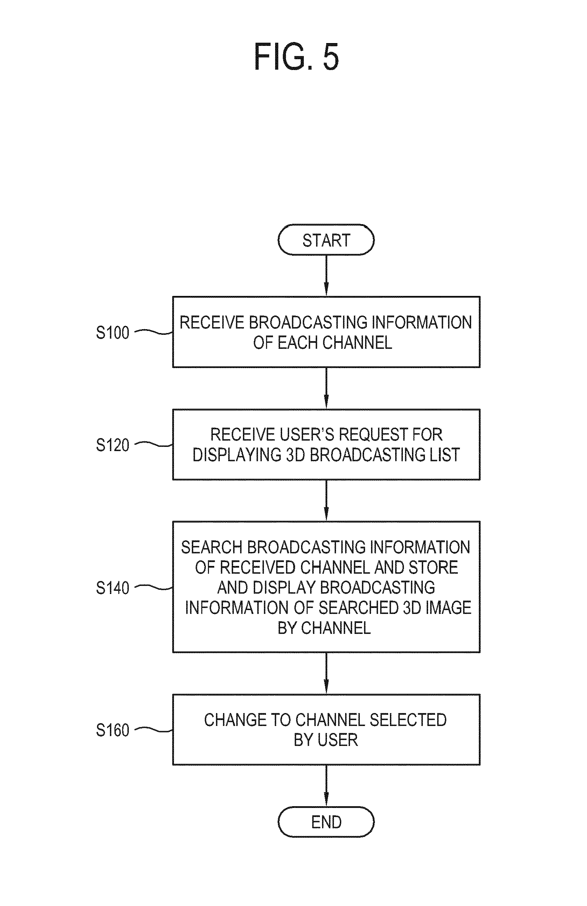

FIG. 5 is a flowchart of a control method for displaying broadcasting information of a 3D image of the display apparatus according to an exemplary embodiment.

Referring to FIG. 5, the display apparatus 1 receives broadcasting information of each channel through the signal receiver 10 (S100). The display apparatus 1 receives a user's request for displaying a 3D broadcasting list through a menu of the display apparatus 1 or a remote controller (S120). The controller 20 searches broadcasting information of each channel and stores the broadcasting information of the searched 3D image by channel in the storage unit 30, and then displays the broadcasting information on the display unit 50 (S140). A user may select and view a desired channel among broadcasting information of the 3D image of each channel displayed on the display unit 50 by using a mouse or a channel movement key.

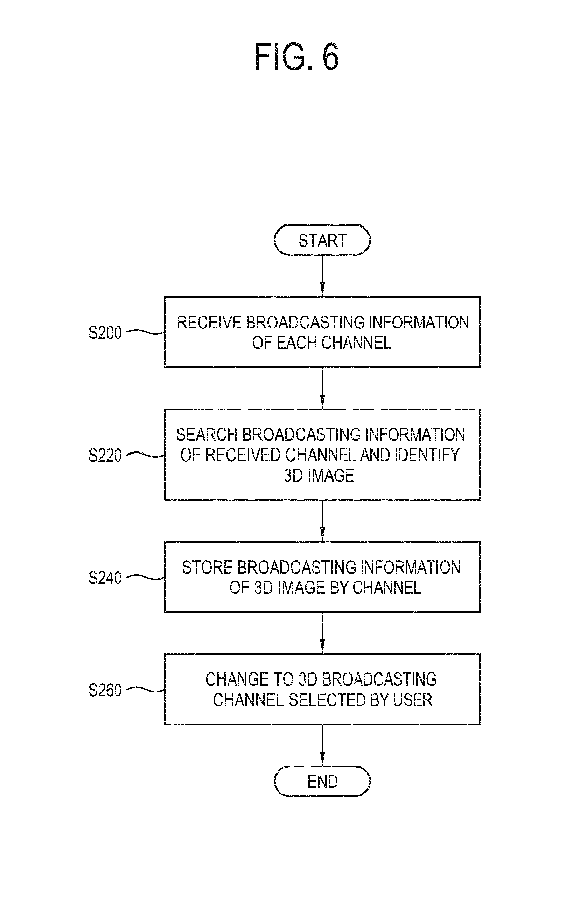

FIG. 6 is a flowchart of a control method for displaying broadcasting information of a 3D image of the display apparatus according to another exemplary embodiment.

FIG. 6 illustrates a method of selecting a 3D broadcasting channel by a user while broadcasting information of the 3D image is not displayed on the display unit 50.

The display apparatus 1 receives broadcasting information of each channel through the signal receiver 10 (S200). The controller 20 of the display apparatus 1 searches received broadcasting information of each channel and identifies a 3D image (S220). The controller 20 automatically stores in the storage unit 30 the broadcasting information of the identified 3D image by channel (S240). Then a channel is changed to a 3D broadcasting channel selected by a user through an exclusive key for 3D broadcasting channel of a remote controller (S260).

According to an exemplary embodiment, the display apparatus extracts broadcasting information of a 3D image only and displays the broadcasting information by channel. Thus, a user may easily and promptly changes a channel to a desired 3D broadcasting channel. The display apparatus displays 3D mode information in addition to the broadcasting information of the 3D image, and provides information on the type of 3D to which a user should set the display apparatus to view the corresponding program.

As described above, a display apparatus and a control method thereof which displays broadcasting information of a 3D image according to an exemplary embodiment may reduce a user's inconvenience in searching a 3D broadcasting channel by a user wearing 3D glasses if broadcasting stations provide 3D channels in the future.

Further, the display apparatus and the control method thereof according to an exemplary embodiment extracts broadcasting information of a 3D image only, displays broadcasting information of each channel and enables a user to easily and promptly change a channel to a desired broadcasting channel for viewing.

Further, the display apparatus and the control method thereof according to an exemplary embodiment displays 3D mode information in addition to broadcasting information of a 3D image, and provides information on setting a 3D mode to which a user should set the display apparatus to view the corresponding program.

Further, the display apparatus and the control method thereof according to an exemplary embodiment automatically stores broadcasting information of a 3D image by channel and enables a user to change and select a particular channel among channels broadcasting a 3D image by using an exclusive key of a remote controller even if broadcasting information of the 3D image is not displayed in the screen.

Although a few exemplary embodiments have been shown and described, it will be appreciated by those skilled in the art that changes may be made in these exemplary embodiments without departing from the principles of the present inventive concept.

## Claims

1. A display apparatus which displays broadcast information of a three-dimensional (3D) image, the display apparatus comprising:
a signal receiver configured to receive a broadcasting signal comprising broadcasting information of each channel included in the broadcasting signal, wherein the received broadcasting information comprises the broadcast information of the 3D image;
an image processor configured to process the received broadcasting signal to display an image;
a display unit configured to display the image and/or the broadcasting information based on the received broadcasting signal; and
a controller configured to search the received broadcasting information of each channel, identify the 3D image among the broadcasting information and display the broadcasting information of the 3D image by channel on the display unit, and upon receiving a selection of a desired channel by a user, the controller is configured to change to the desired channel selected by a user.

2. The display apparatus according to claim 1, wherein each channel displays broadcasting information of the 3D image comprising or from an exclusive 3D broadcasting channel and a two-dimensional (2D) broadcasting channel.

3. The display apparatus according to claim 1, wherein the controller is configured to search the received broadcasting information by channel for broadcasting programs which are currently being broadcast.

4. The display apparatus according to claim 1, wherein if the user inputs time information or if a predetermined time is set automatically via the received broadcasting information, the controller is configured to search the received broadcasting information by channel for at least one broadcast corresponding to one of the predetermined time and the time information input by the user.

5. The display apparatus according to claim 1, wherein the broadcasting information of the 3D image comprises one or more of a channel name, a broadcasting time and summary information of broadcasting programs.

6. The display apparatus according to claim 5, wherein the broadcasting information of the 3D image further comprises rating information of the broadcasting programs.

7. The display apparatus according to claim 1, wherein the broadcasting information of the 3D image comprises 3D information of the image,
and optionally, the 3D information of the image comprises 3D mode information, which comprises one or more of a side-by-side mode, a top-bottom mode, a checkerboard mode, a frame sequence mode and a frame package mode.

8. The display apparatus according to claim 1, further comprising a storage unit which stores broadcasting information of the searched for 3D image by channel.

9. A control method of a display apparatus displaying broadcasting information of a three-dimensional (3D) image, the control method comprising:
receiving broadcasting information of each channel included in the broadcasting signal, wherein the broadcasting information comprises the broadcasting information of the 3D image;
searching the received broadcasting information of each channel for the 3D image;
displaying the broadcasting information of the searched for 3D image by channel; and
changing to a channel selected by the user.

10. The control method according to claim 9, wherein each channel comprises an exclusive 3D broadcasting channel and a two-dimensional (2D) broadcasting channel.

11. The control method according to claim 9, wherein the searching the broadcasting information comprises searching the broadcasting information by each channel for broadcasting programs which are currently being broadcast.

12. The control method according to claim 9, wherein, if the user inputs time information or a predetermined time is set automatically via the broadcasting information, the searching comprises searching the broadcasting information by each channel for broadcasting programs broadcast at a time corresponding to one of the predetermined time and the time information input by the user.

13. The control method according to claim 9, wherein the broadcasting information of the 3D image comprises one or more of: a channel name, a broadcasting time and summary information of broadcasting programs, and rating information of the broadcasting programs.

14. The control method according to claim 9 comprising receiving a user request for displaying a 3D broadcasting list;

15. The control method according to claim 9, wherein the broadcasting information of the 3D image comprises 3D information of the image,
wherein the 3D information of the image comprises 3D mode information, which comprises a side side-by-side mode, a top-bottom mode, a checkerboard mode, a frame sequence mode and a frame package mode.
